# EUROPEAN PATENT APPLICATION

(11) **EP 4 116 908 A1**
(43) Date of publication of application: **11.01.2023**
(21) Application number: 22182741.3
(22) Date of filing: 04.07.2022
(51) Int. Cl.: G06Q 20/22, G06Q 20/06, G06Q 20/24, G06Q 20/38

(54) **METHOD AND APPARATUS FOR FACILITATING FINANCIAL TRANSACTIONS BACKED BY CRYPTO ASSETS**

(30) Priority: 07.07.2021 US 202117368930
(71) Applicant: Affirm, Inc., San Francisco, CA 94108 (US)
(72) Inventor: SCHLESINGER, Garrett, San Francisco, 94108 (US)
(74) Representative: Piotrowicz, Pawel Jan Andrzej

(57) **Abstract**

A method of processing a customer transaction may include receiving an indication of a transaction between a customer and a vendor, checking a first account status of a first account associated with a first currency type and a second account status of a second account associated with a second currency type, determining whether to accept or decline the transaction based on a combination of the first and second account statuses, and, if the transaction is accepted, authorizing a transfer of funds to the vendor and engaging the customer with respect to a repayment strategy that includes repayment options funded from selected ones of the first currency type or the second currency type.

## Description

### TECHNICAL FIELD

Example embodiments generally relate to financial industry technologies and, in particular, relate to apparatuses, systems, and methods for facilitating commerce and for enabling customers to conduct transactions backed by crypto-currency.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In each of the cases above, the transactions are generally conducted in a fiat currency such as Euros, Dollars, or the like. Meanwhile, crypto-currency (commonly simply referred to as "crypto") is now becoming popular, and is owned in various quantities by more and more people. Crypto is a digital asset designed to work as a form of currency or "medium of exchange." Crypto is generally very secure, since individual coin ownership records are stored in a cryptographically secured ledger. However, crypto is a volatile asset, and valuations for crypto can swing significantly in a relatively short time. Additionally, crypto is often held by its owners in an exchange dedicated to such assets, and crypto is therefore somewhat illiquid in that it is difficult to use crypto to fund transactions. The crypto owner would normally have to sell crypto in the exchange and be credited in fiat currency. The fiat currency would then be used to conduct the transactions.

Accordingly, it may be desirable to establish more effective and accessible ways by which to enable consumers to utilize crypto to fund transactions.

### BRIEF SUMMARY OF SOME EXAMPLES

Accordingly, some example embodiments may enable the provision of technical means by which to give customers the ability to leverage crypto to fund transactions. Such ability may enable customers to have access to the value of their crypto assets and thereby effectively improve the liquidity of crypto assets.

In an example embodiment, a method of processing a customer transaction may be provided. The method may include receiving an indication of a transaction between a customer and a vendor, checking a first account status of a first account associated with a first currency type and a second account status of a second account associated with a second currency type, determining whether to accept or decline the transaction based on a combination of the first and second account statuses, and, if the transaction is accepted, authorizing a transfer of funds to the vendor and engaging the customer with respect to a repayment strategy that includes repayment options funded from selected ones of the first currency type or the second currency type.

In another example embodiment, an apparatus for processing a customer transaction may be provided. The apparatus may include processing circuitry configured to receive an indication of a transaction between a customer and a vendor, check a first account status of a first account associated with a first currency type and a second account status of a second account associated with a second currency type, determine whether to accept or decline the transaction based on a combination of the first and second account statuses, and, if the transaction is accepted, authorize a transfer of funds to the vendor and engage the customer with respect to a repayment strategy that includes repayment options funded from selected ones of the first currency type or the second currency type.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform that employs multiple currency types according to an example embodiment;
FIG. 2 illustrates a functional block diagram of an apparatus for defining a currency integrator according to an example embodiment;
FIG. 3 illustrates a block diagram showing control flow for account setup in accordance with an example embodiment;
FIG. 4 illustrates a block diagram for control flow associated with transaction handling in accordance with an example embodiment; and
FIG. 5 illustrates a method for managing a customer transaction in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other to exchange information across different currencies (and currency types). As such, the data processing platform may be embodied as a currency integration and lending platform (i.e., CIL platform) that connects customers, banks or lenders, merchants (or vendors), and payment services within the financial industry and across different currencies and currency types. By enabling data between the players on or members of the platform to be shared, and by further providing customers with tools for using the platform to manage individual transactions that leverage assets of different currency types (e.g., fiat money and digital currency (e.g., crypto)), the customers may have vastly improved capabilities for leveraging crypto assets as liquid assets. In an example embodiment, the platform may be employed under the management of a lender (or intermediary to a lender) to extend credit to customers who access the platform based at least in part on the crypto assets held by the customers, but deal with vendors or merchants in the fiat currencies that they are used to dealing with. Accordingly, a commercial framework can be provided by a technical platform designed to connect customers having crypto assets with access to financial support to effect transactions in real time without the need for converting the crypto assets to fiat currency in connection with any individual transaction. Some embodiments may also enable customers significant flexibility in deciding, before, during or after the transaction, how it will be settled in relation to crypto assets. In other words, instead of merely initiating a platform for supporting loans such as buy now, pay later transactions, that use crypto assets as collateral, example embodiments provide customers with technical means by which to buy now using a first currency type (e.g., fiat currency) with credit limits determined at least in part based on assets of the first currency type and/or a second currency type (e.g., crypto asset holdings), and employ a number of technical tools to dictate the terms by which to pay later in relation to those first and second currency types. Various automated tripwires or protective functions are also built into the platform based on the volatility of crypto assets, and rewards and incentives can be employed in a currency type of choice.

Within this context, a transaction is considered "settled" when all parties involved in the transaction have received any payments or funds that may be owed to them. Thus, if cash is paid to the vendor by the customer, the transaction is immediately settled. For a credit card purchase, the transaction may be settled when the vendor has received funds from a bank associated with the credit card, and the customer has paid the bank accordingly so that the bank has also received the funds it advanced on behalf of the customer to the vendor. Similarly, for a loan, the transaction may be settled when the seller has received funds from a lender, and the borrower has paid the lender accordingly so that the lender has also received the funds it advanced on behalf of the borrower to the seller. Example embodiments may allow a transaction to proceed as any normal credit purchase, debit purchase, or loan backed purchase as far as the vendor or seller is concerned. However, the customer or borrower is utilizing crypto assets to contribute to determining how much credit the customer or borrower can receive from the bank or lender, and also utilizing the crypto assets to contribute in selected ways agreed to between the customer/borrower and the bank/lender to deciding how to settle the transaction and handle any rewards or incentives to individual or additional transactions. In some examples, the credit extended by the bank or lender may be in the form of a loan (e.g., a buy now, pay later loan). In this context, a buy now, pay later loan should be considered to be an installment loan, or a loan that has a fixed payment amount and term for making such payments. In other words, the buy now, pay later or installment loan does not have a conventional interest rate that applies over whatever indeterminate period of time the customer chooses to keep the loan by not paying off the entire principal.

Example embodiments not only provide the CIL platform, but also provide various enabling technologies that may facilitate operation of the CIL platform itself or of modules that may interact with the CIL platform. Example embodiments may also provide for enhancement of functionalities associated with the environment that is created by the CIL platform. The CIL platform may provide a mechanism by which to enhance commerce in a responsible way that is both empathetic and empowering to customers.

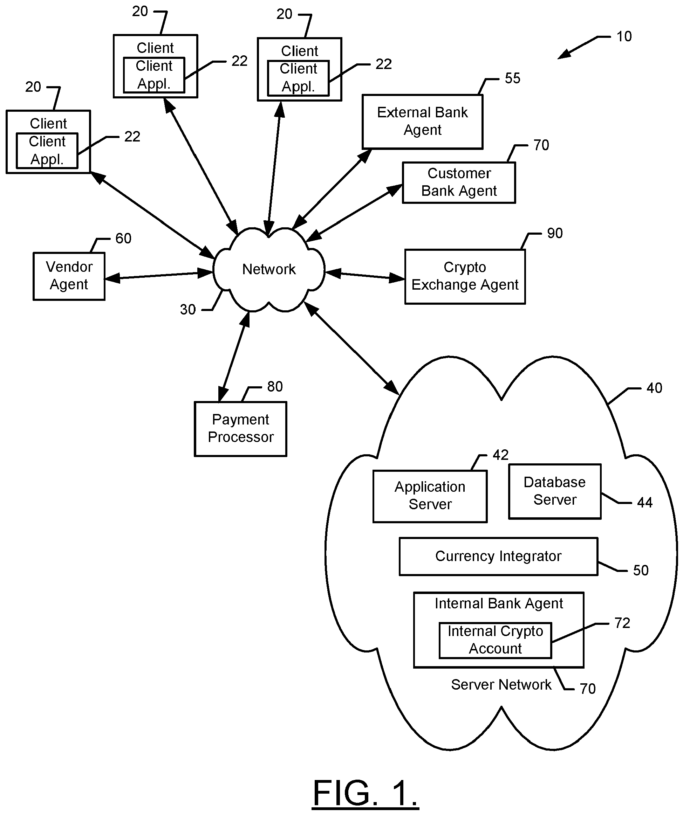

An example embodiment of the invention will now be described in reference to FIG. 1, which illustrates an example system in which an embodiment of the present invention may be employed. As shown in FIG. 1, a system comprising an CIL platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the CIL platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may each include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to the CIL platform 10, and more particularly relating to facilitating transactions where the details of setting the transaction will be determined after the transaction. For example, the application server 42 may be configured to provide for storage of information descriptive of events or activities associated with the CIL platform 10 and the execution of a financial transaction on behalf of a customer, where the financial transaction is conducted in a first currency type, while credit decisions, settlement and/or rewards are handled in a combination of the first currency type and a second currency type. In a typical example, the first currency type may be a fiat currency (and may include multiple different fiat currencies such as Dollars and Euros) and the second currency type may be a digital currency such as crypto (and may include multiple different types of crypto such as Bitcoin and Ether). In some cases, data and/or services may be exchanged amongst members of the CIL platform 10, where specific needs or desires of the members are aligned with respect to playing their respective roles in connection with conducting the financial transaction, and enabling the settlement currencies used for settling the transaction to be managed with various combinations of the first and second currency types.

In some embodiments, for example, the application server 42 may therefore include an instance of multi-currency transaction facilitator. The multi-currency transaction facilitator may be configured to facilitate communications, connections and fund transfers to support execution of a purchase activity (e.g., involving a product or service) that enables the customer to conduct the transaction using a user account that is tied to assets of different types (e.g., crypto and fiat currencies). Thus, the multi-currency transaction facilitator may effectively enable the integration of multiple currency types (and potentially also multiple currencies within each type) into making decisions on credit limits, authorization of transactions, setting transactions, and/or issuing rewards and handling returns related to transactions. Due to the ability to integrate multiple currency types into such transactional activities, the multi-currency transaction facilitator may be referred to as a currency integrator 50. Thus, the currency integrator 50 may include stored instructions for handling activities associated with practicing example embodiments as described herein. The currency integrator 50 may be a technical device, component or module affiliated with the facilitator of the functioning of the CIL platform 10 (e.g., a lender or other financial institution). Thus, the currency integrator 50 may operate under control of the facilitator to be a technical means by which to carry out activities under direction of the facilitator or employees thereof. As such, in some embodiments, the clients 20 may access the CIL platform 10 services, and more particularly contact the currency integrator 50 online and utilize the services provided thereby. However, it should be appreciated that in other embodiments, an application (e.g., the client application 22) enabling the clients 20 to interact with the currency integrator 50 (or components thereof) may be provided from the application server 42 (e.g., via download over the network 30) to one or more of the clients 20 to enable recipient clients to instantiate an instance of the client application 22 for local operation such that the currency integrator 50 may be a distributor of software enabling members or parties to participate in operation of the CIL platform 10. Alternatively, another distributor of the software may provide the client 20 with the client application 22, and the currency integrator 50 may communicate with the client 20 (via the client application 22) after such download.

In an example embodiment, the client application 22 may therefore include application programming interfaces (APIs) and other web interfaces to enable the client 20 to conduct business via the CIL platform 10. The client application 22 may include a series of control consoles or web pages including a landing page, onboarding services, activity feed, account settings (e.g., user profile information), transaction management services, payment management services and the like in cooperation with a service application that may be executed at the currency integrator 50. Thus, for example, the client application 22 may enable the customer to review monthly statements, request a physical credit or debit card, turn on or off a virtual or digital card, access or adjust information associated with the customer account, or receive help or other information. Budgeting tools and other useful information and other useful tools for managing the finances of the customer may also be available via the client application 22 in some cases.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the currency integrator 50 configured to operate in accordance with an example embodiment of the present invention. In this regard, for example, the currency integrator 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal (e.g., a computer including a user interface) via which individual operators or managers of the entity associated with the facilitation agent may interact with, configure or otherwise maintain the CIL platform 10 and/or the currency integrator 50.

As such, the environment of FIG. 1 illustrates an example in which provision of content and information associated with the financial industry (e.g., including at least some data provided to/from customers and/or vendors in real-time) may be accomplished by a particular entity (namely the currency integrator 50 residing at the application server 42). Thus, the currency integrator 50 may be configured to handle provision of content and information associated with tasks that are associated only with the CIL platform 10. Access to the currency integrator 50 may therefore be secured as appropriate for the individuals or organizations involved and credentials of individuals or organizations attempting to utilize the tools provided herein may be managed by digital rights management services or other authentication and security services or protocols that are outside the scope of this disclosure.

The CIL platform 10 may also operate in cooperation with an external bank agent 55, a vendor agent 60, an internal bank agent 70, a payment processor 80 and a crypto exchange agent 90. The currency integrator 50 may be configured to interact with, or otherwise facilitate interactions between, any or all of the external bank agent 55, the vendor agent 60, the internal bank agent 70, the payment processor 80 and the crypto exchange agent 90 in order to carry out example embodiments as described herein. Thus, each of the external bank agent 55, the vendor agent 60, the internal bank agent 70, the payment processor 80 and the crypto exchange agent 90 should be understood to be a computer, server, smart phone, or other technical component or module associated with a respective party (e.g., a lender, a vendor, an internal banking function, a payment service, and a crypto exchange, respectively) that is capable of communication with other parties via the network 30, and under control of or responsive to facilitating communication by the currency integrator 50.

The external bank may be a bank or other financial services provider. The external bank may have a persistent relationship with the entity associated with the currency integrator 50 (e.g., the facilitator), but generally need not have any persistent or pre-existing relationship with the customer or the internal bank. In some cases, the external bank may be the same organization as the entity associated with the currency integrator 50. The external bank may be contracted with or otherwise have a pre-existing relationship with the currency integrator 50 (and entity associated therewith) that enables the currency integrator 50 to facilitate transactions on behalf of the customer when certain conditions (agreed upon in advance by the entity associated with the currency integrator 50 and the external bank) are met associated with a transaction undertaken (or attempted) by the customer via the client 20 and client application 22 or via other approved means. For example, the external bank may be the issuer of the debit or credit card on behalf of the currency integrator 50 and be responsible for directly paying the merchants and vendors during a transaction initiated by the customer via the debit or credit card.

The external bank may also or alternatively be a bank at which the customer (i.e., associated with one of the clients 20) deposits money in a bank account such as a savings account or a checking account. In an example embodiment, the customer may subscribe or register to a service or request a card (e.g., a credit card, debit card or other virtual or digital card) from the currency integrator 50 to enroll the customer as a member of the CIL platform 10. During subscription or registration, the customer may be prompted (via the client 20 and client application 22) by the currency integrator 50 to provide account details identifying the savings account or checking account (i.e., a customer account) at the internal bank. The customer may, by registering or subscribing, further authorize the currency integrator 50 to conduct specific activities related to the customer account when corresponding conditions are met, which may be facilitated by one of or a combination of the bank authenticator and the external bank as described above. The activities may include checking account status (i.e., checking a current balance of funds deposited in the customer account) and/or authorizing withdrawal of funds from the customer account by the payment processor 80 in order to settle a transaction or make payments to the currency integrator 50.

The internal bank may function similarly to (or exactly the same as) the external bank with the exception being that the internal bank may be directly affiliated with the facilitator or operator of the CIL platform 10. Thus, as noted above, the internal bank may extend credit via a credit card, debit card or other virtual or digital card or via a buy now, pay later loan, or other type of loan. The internal bank may also therefore have an internal checking account, savings account, or credit card account, in addition to account services for the customer in association with one or more buy now, play later loans or other credit vehicles. Moreover, in some cases, the internal bank may also include an internal crypto account 72, which may retain crypto assets belonging to the customers (with such assets being proportionally assigned to user accounts of customers owning crypto assets via the internal bank instead of directly in the name of such customers via the crypto exchange agent 90.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. The payment processor 80 may be used to setup recurring fund transfers (managed by the currency integrator 50) and, in some cases, those fund transfers may involve the movement of assets in either the first currency type or the second currency type in predetermined percentage-based allocations.

The crypto exchange may be an institution or entity at which the customer (i.e., associated with one of the clients 20) retains crypto assets (e.g., Bitcoin, Ether or the like) in an account associated with or owned by the customer (e.g., a crypto asset account). In an example embodiment, when the customer subscribes or registers to the service offered by the currency integrator 50 to enroll the customer as a member of the CIL platform 10, the customer may be prompted (via the client 20 and client application 22) by the currency integrator 50 to provide crypto asset account details identifying the crypto assets. The customer may, by registering or subscribing, further authorize the currency integrator 50 to conduct specific activities related to the crypto assets and/or the crypto asset account when corresponding conditions are met, which may be facilitated by one of or a combination of the customer and the facilitator of the CIL platform 10 as described above. The activities may include checking crypto asset account status (i.e., checking a current balance in terms of number and present market value of the crypto assets in the crypto asset account) and/or authorizing withdrawal or deposit of crypto assets, or conversion of such assets into fiat currency (e.g., by the payment processor 80 or the external bank agent 55) in order to settle a transaction or make payments to the currency integrator 50, or to reward customer activity on the CIL platform 10.

The external bank agent 55 may change for each respective one of the clients 20 (and therefore for each respective customer). Similarly, the vendor agent 60 may change for each respective transaction since different vendors may be involved in different transactions involving the clients 20. In some examples, the external bank agent 55 and the payment processor 80 may remain the same entities across all transactions managed by the currency integrator 50. However, the currency integrator 50 could use different bank agents in different geographic areas or jurisdictions, and the payment processor 80 may also change on the same bases.

Example embodiments may therefore be understood to be practicable with either entirely external accounts (e.g., checking accounts, savings accounts, credit/debit cards and/or crypto accounts that exist with the external bank and the crypto exchange in the name of a particular customer who has registered and provided various levels of access to the external accounts to the currency integrator 50), entirely internal accounts (e.g., checking accounts, savings accounts, credit/debit cards and/or crypto accounts that are held in the internal bank in the name (and user account) of a particular customer who has registered and established a user account with the currency integrator 50.

As noted above, the CIL platform 10 may operate to enable the customer associated with a given one of the clients 20 to make a purchase in real time from a vendor associated with the vendor agent 60. In some example embodiments, the client application 22 may be used in connection with setting up the account details that are then used as the basis for managing interactions between the parties shown in FIG. 1 under control of the currency integrator 50. In this regard, for example, the client application 22 may be used to engage (e.g., via a website and corresponding APIs) with the currency integrator 50 to set up an account with the currency integrator 50 for services associated with the CIL platform 10. The currency integrator 50 may prompt the client 20 to provide account details associated with the internal bank agent 70 and the crypto exchange agent 90. The currency integrator 50 may also provide terms and conditions (electronically or via mail or other communication means) that the customer may accept to establish a user profile and user account with the currency integrator 50. In some cases, the customer may be provided with a card (e.g., a debit card or credit card) or other physical implement that can be used to initiate transactions with vendors. As noted above, the card may be issued by the external bank or internal bank. The card (or cards) may be associated with the user account, and may provide identifying information needed to initiate operation of the CIL platform 10 (and the currency integrator 50) as described herein when the customer uses the card to make a purchase with a vendor. The card may be physically presented for such purpose and magnetic strip, chip or other technologies may be used in connection with initiating the transaction. Otherwise, the card number provided on the card may be unique to the user account, and may be provided to the vendor to initiate the transaction. As an additional or alternative way to initiate a transaction, the card may be virtual and may exist in a mobile wallet or other smartphone context for initiating transactions online. In such a context, the client application 22 may also or alternatively be the means by which the transaction is initiated or handled. Thus, it should be appreciated that the client application 22 could be used to set up the user account and user profile and/or to conduct individual transactions.

During establishment of the user account, the customer may provide an identification of the external bank associated with the external bank agent 55 and of the crypto exchange associated with the crypto exchange agent 90. The customer may also provide details for the savings or checking account that the customer maintains at the external bank and for the crypto asset account the customer maintains at the crypto exchange. The customer may also establish or connect any account information at the internal bank to the user account established at the currency integrator 50. The customer may also authorize the currency integrator 50 to make real time (or anytime) checks on account status (e.g., account balance or crypto asset balance) or to make periodic routine checks of the same. Thus, for example, for each transaction or when credit is requested by the customer (e.g., when requesting an increased credit limit in advance of a purchase), the currency integrator 50 may be enabled to check the account balances of the customer in terms of accounts involving a first currency type (e.g., fiat currency of any type at the external bank or internal bank) and a second currency type (e.g., crypto at the crypto exchange or internal crypto account 72). Alternatively or additionally, the currency integrator 50 may make routine checks or snapshot looks at the account balances. For example, a check may be made every day at a certain time, every two or three days, or at other standard or random intervals. The account status of the internal bank and the crypto asset account status of the crypto exchange may be used by the currency integrator 50 in making credit extension decisions and in facilitating payment transactions, which may include deferred decision making or preprogrammed rules as to how to settle such transactions in relation to the first and second currency types as described in greater detail below.

The external bank may have an agreement or relationship with the entity associated with the currency integrator 50 that enables the currency integrator 50 to engage the external bank to extend funds in the first currency type to a merchant or vendor on behalf of the customer in response to instruction from the currency integrator 50. The currency integrator 50 may therefore coordinate communications and funds transferring between members or parties of the CIL platform 10 to facilitate payment transactions that can be settled in ways selected specifically by the customer in relation to the first and second currency types. In this regard, the customer may approach the vendor (physically or virtually) in order to initiate a transaction. The card (virtual or physical) may be provided for payment, and the corresponding indication of a pending transaction may be communicated (e.g., via the CIL platform 10 by the vendor agent 60 and/or the client 20 via the network 30. The communication and activities that ensue thereafter will now be described greater detail below.

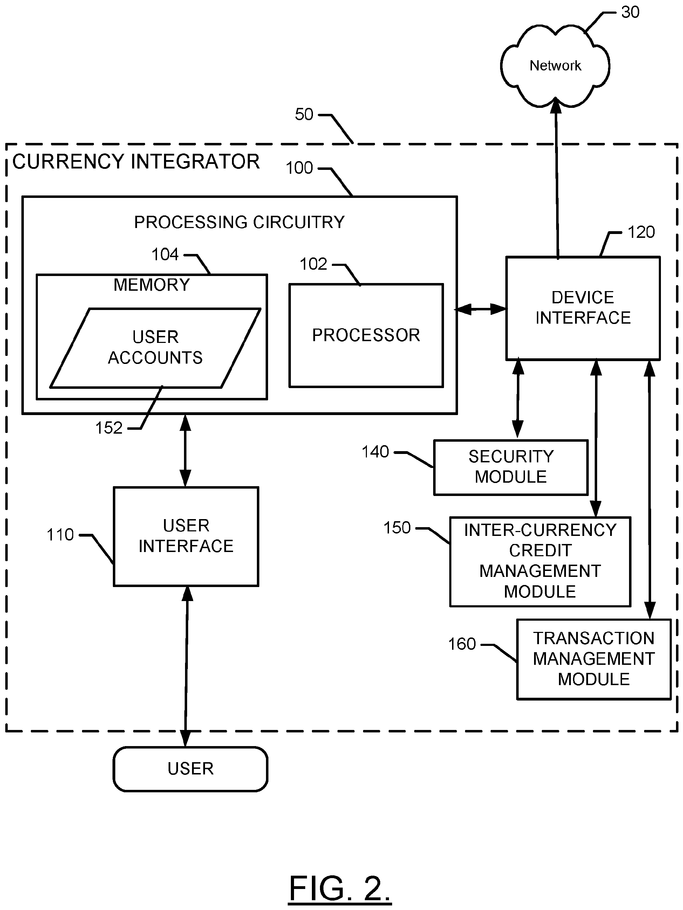

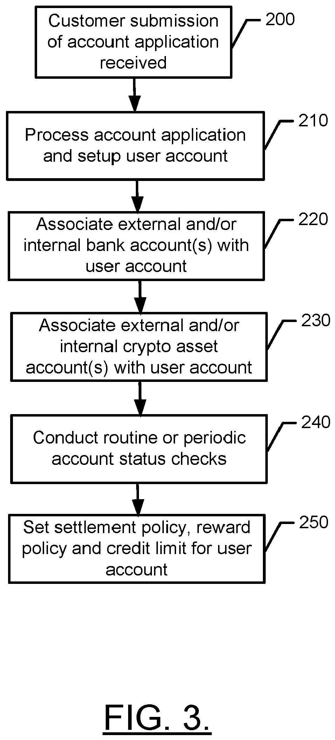

Regardless of how the transactions are initiated, the CIL platform 10 of FIG. 1 may be used before, during and after the time of the transaction in order to enable the currency integrator 50 to set up the user account, make determinations necessary to initiate the transactions in real time responsive to initiation of the transaction, facilitate enabling the customer to decide (before, during or after the transaction) how to settle the transaction in relation to the first and second currency types, coordinate settlement of funds associated with the transaction at the appropriate time and in the appropriate currency (or combination of currencies), and (if applicable) provide rewards or incentives in the first or second types of currency. Each of these activities may have its own respective timing and communications that are facilitated by the currency integrator 50 and FIGS. 3-5 illustrate example control flows associated with different scenarios. However, prior to examining each respective scenario, the structures associated with an apparatus at which the currency integrator 50 of an example embodiment may be instantiated will be described in reference to FIG. 2.

FIG. 2 shows certain elements of an apparatus for provision of the currency integrator 50 or other processing circuitry according to an example embodiment. The apparatus of FIG. 2 may be employed, for example, as the currency integrator 50 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the currency integrator 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the currency integrator 50 or a device of the CIL platform hosting the currency integrator 50. As such, configuration of the apparatus as described herein may transform the apparatus into the currency integrator 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the currency integrator 50, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the currency integrator 50as described below.

The currency integrator 50 may be configured to include tools to facilitate the creation of customer or user accounts (and a corresponding user profile), and the coordination of communication and currency transfers to support the operations of the CIL platform 10 as described herein. The tools may be provided in the form of various modules that may be instantiated by configuration of the processing circuitry 100. FIG. 2 illustrates some examples of modules that may be included in the currency integrator 50 and that may be individually configured to perform one or more of the individual tasks or functions generally attributable to the currency integrator 50 according to an example embodiment. However, the currency integrator 50 need not necessarily be modular. In cases where the currency integrator 50 employs modules, the modules may, for example, be configured to perform the tasks and functions described herein. In some embodiments, the currency integrator 50 and/or any modules comprising the currency integrator 50 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the currency integrator 50 and/or any modules thereof, as described herein.

As shown in FIG. 2, the currency integrator 50 may include a security module 140. The security module 140 may be configured to enforce data security and data/user access control. In some example embodiments, the security module 140 may employ authentication and authorization tools to manage the provision of access to customers or other CIL platform 10 members or entities wishing to access the CIL platform 10. The security module 140 may operate on queries or communications in real time as such queries or communications are occurring.

The currency integrator 50 may also include an inter-currency credit management module 150. The inter-currency credit management module 150 may be configured to manage storage of and access to information about individual customers including user accounts 152 that include accounts associated with each of the first and second currency types mentioned above, and may have access to funds associated with accounts of the internal bank or the internal crypto account 72. The inter-currency credit management module 150 may also include corresponding user profiles, which may include descriptive information about settings, approvals, or management paradigms that apply to specific vendors, transactions or situations for each instance of the user accounts 152. The user accounts 152 may include details of the checking or savings account at the internal bank and the crypto asset account at the crypto exchange for each customer and respective client 20, and authorizations to check account status for each.

In an example embodiment, the inter-currency credit management module 150 may handle communications with the clients 20 associated with setting up the user accounts 152. The user profile associated with each respective one of the user accounts 152 may include user preferences, entitlements, or authorizations (e.g., credit limits) with respect to the amount of debt each user is enabled to take on either in aggregate, on a transaction by transaction basis, on a vendor basis, or with respect to specific types of goods or services. Each transaction may, for example, be authorized only if rules associated with either user preferences or policies that the customer has reviewed and accepted as terms of service are met. Those rules may be established during account setup and recorded for each of the user accounts 152 by the inter-currency credit management module 150. And some examples of those rules are described in greater detail below.

In an example embodiment, the currency integrator 50 may also include a transaction management module 160. The transaction management module 160 may coordinate or facilitate all communications with the parties to the CIL platform 10 in association with each transaction that is initiated by a customer. As such, the transaction management module 160 may be configured to receive an indication of a pending transaction and, within a predetermined period of time (e.g., 3 seconds) make a determination as to whether to authorize the transaction or deny the transaction. The decision to authorize or deny the transaction may be made based on either a real time and concurrent check on the account status (e.g., account balance) of the checking or savings account identified in the user account 152, or based on the last snapshot of the account status (assuming the snapshot was taken within a predetermined period of time (e.g., 3 days or less). If the account status is satisfactory, the transaction may be authorized, and further communications and coordination details described below may be handled by the transaction management module 160.

The transaction management module 160 may also be configured to, assuming certain criteria are met, provide the customer with options for either immediate settlement relative to the transaction using one or a combination of the accounts currency types, or whether to convert the transaction to a buy now, pay later loan with predetermined (or customer selected) payment terms that may also include payment options that relate to either or both of the first and second currency types. The transaction management module 160 may therefore handle communications with the client 20, the vendor agent 60, the internal bank agent 70, the crypto exchange agent 90, the external bank agent 55, and the payment processor 80 as described herein in response to and after handling a transaction.

FIG. 3 illustrates a block diagram of a communication paradigm that is achievable using an example embodiment for setting up a user account. Referring to FIG. 3, a client (e.g., one of the clients 20 of FIG. 1) may make an account application at operation 200. The account application may be submitted to the currency integrator 50 via the client application 22 and interface with a website or smart phone application for account setup. The account application may include an identification of the customer (or user) and information establishing a confirmation of employment or monthly income for the customer. The account application may also or alternatively provide account details for the savings account and/or checking account that will serve as the primary account from which funds for settling transactions are extracted. The account application may also include permissions, acknowledgements and any other required communications to authorize setup of the user account 152. At operation 210, the currency integrator 50 may process the account application and setup the user account incorporating a user profile for the user account. As noted above, the user account may include identifying information for the checking or savings account, credit/debit cards, and/or crypto assets of the customer at any or all of the external bank the crypto exchange and the internal bank. Thereafter, at operation 220, the currency integrator 50 (and more specifically, the inter-currency credit management module 150) may associate external and/or internal bank account(s) with the user account. At operation 230, the currency integrator 50 may also associate external and/or internal crypto asset account(s) with the user account. Any needed permissions, authorizations, etc., may be established and tested as well. At operation 240, the currency integrator 50 may routinely or periodically check the checking or savings account to determine account status and retain such information for transaction processing as described herein. Periodic checks may occur with a selected periodicity and each check may return a snapshot view of the account status (of the user account, and therefore also of the associated bank and crypto asset accounts) at the corresponding time. Routine checks may be initiated responsive to specific activities such as initiation of a transaction. At operation 250 (which notably need not be last, and can be executed any time after operation 210), the currency integrator 50 may set (with or without customer interaction) settlement policies or preferences, set reward policies or preferences, and credit limits for the user account. As noted above, the inter-currency credit management module 150 may handle the processes of the currency integrator 50 that are covered by the example of FIG. 3.

In an example embodiment, operation 250 may be accomplished via one or more consoles or interfaces that are designed to present options to the customer that are tailored for the user account 152 of the customer. In other words, in some cases, the options presented to the customer for account setup may be determined based on the status of accounts and/or assets associated with the customer. Meanwhile, with respect to a number of the settings that impact the user account 152 (e.g., account settings), a combination of various default settings for each respective feature associated with servicing the user account 152 may be provided. The default settings may, in some cases, be modified by the operator of the CIL platform 10. However, at least some default settings may also or alternatively be modified by the customer, or at least the customer may request changes to default settings, and such requests may be considered for approval by the operator of the CIL platform 10.

Some of the account settings may relate to credit decisions managed by the inter-currency credit management module 150. In this regard, determinations as to a credit limit to extend to a particular customer, and rules for thresholds to apply with respect to extending credit for a specific purchase may be examples of credit decisions. In an example embodiment, the inter-currency credit management module 150 may employ algorithms for determining the amount of available spend (or total credit limit) to associate with each of the user accounts 152. The amount of available spend (AAS) may be calculated based on the amount of assets of the first and second currency types either visible to the inter-currency credit management module 150 (e.g., in the external bank or internal bank). However, in an example embodiment, since the assets in the external bank may not be accessible to the operator of the CIL platform 10, the AAS may sometimes be calculated by summing a total first currency type (e.g., fiat currency) in internal bank accounts of the customer with a fixed percentage times total second currency type (e.g., crypto) in the internal crypto account 72. This sum may then have the total amount of purchase exposure (PEtot), which is the amount already lent to the customer, subtracted therefrom in order to arrive at the AAS. Within this context the fixed percentage of crypto assets may be used to account for the fact that crypto assets are volatile and therefore valuations (in fiat currency) of the crypto assets can change significantly in short amounts of time. Thus, it may be risky to lend based on the full value of crypto assets at any given time. The fixed percentage may therefore be considered as a crypto volatility index (CVI). As a result, an example equation for calculating AAS where the first currency type is fiat currency in the form of US Dollars, and the second currency type is crypto in the form of Bitcoin (BTC) is as follows: AAS = total $ + (CVI ^{∗} total BTC) - PEtot. As noted above, the total $ and total BTC values for this example are calculated from amounts deposited at the internal bank, and therefore accessible to the operator of the CIL platform 10. The total BTC value may notably also be a corresponding value in the fiat currency based on current market exchange rates.

In an example embodiment, the CVI may be selected at 30%. However, higher or lower values could be selected to increase or decrease risk as desired by the operator of the CIL platform 10. Moreover, in some cases, the CVI may be varied dynamically based on the volatility of crypto currency at any given time, and the CVI may be an average value across multiple currencies, or there may be an individual CVI for each crypto currency. In some embodiments, various tripwire volatility thresholds may be defined, and when such thresholds are exceeded, the CVI may be raised or lowered accordingly. During periods of stability in the fluctuation of exchange rates for crypto (either generally or specific to individual currencies), a threshold for low volatility may be triggered and the CVI may be increased. However, if the fluctuation of a single crypto currency (or an average across multiple currencies) is high, the CVI for that crypto currency (or the average CVI for multiple currencies) may be lowered. The tripwires may also or alternatively trigger conversion of assets (to or from crypto) when certain phenomena are noted. Alternatively, the customer may be prompted to note that an advantageous exchange rate can be taken advantage of to buy or transfer assets into crypto (or another currency). In still other cases, automatic conversions of assets may occur when certain tripwires are met to ensure that settlement amounts can be covered before the value of crypto assets drops too low to cover such amounts.

Before the customer attempts to make a purchase, the inter-currency credit management module 150 may calculate the AAS. When the customer attempts to make the purchase, the transaction management module 160 may compare the amount of the purchase (assumed for this example to be in US Dollars) to the AAS. If the amount of the purchase is below the AAS, the purchase may be approved, and the currency integrator 50 may coordinate payment to the vendor as described above, and the amount of the purchase may be transitioned to settlement processing as described in greater detail below.

In an example embodiment, another relevant credit decision may be the amount that is to be made available to the customer for cashout. Calculating a cashout amount (CA) for the customer may be conditionally made by the inter-currency credit management module 150 based on whether PEtot is greater than or less than the total first currency type (e.g., fiat currency) in internal bank accounts of the customer. For example, if total $ - PEtot is greater than zero, then CA = total $ - PEtot + total BTC. Using actual example values, if the total $ is $1000, PEtot is $500 and total BTC currently has a value in US Dollars of $700, then CA = $1000 - $500 + $700, which equals $1200. However, if total $ - PEtot is less than zero, then CA = total BTC - (total $ - PEtot) ^{∗} 1/CVI. Using the example values above, CA - ($700 - ($1000-$500)^{∗}1/30%), which equals $683.33.

Another relevant credit decision may relate to determination of an amount of the first currency type that can be lent to the customer to purchase crypto assets (e.g., via the crypto exchange agent 90 for deposit in the internal crypto account 72), which may be referred to as a crypto acquisition limit (CAL). CAL may be conditional on the relationship of PEtotto total BTC. Thus, for example, if total BTC - PEₜₒₜ^{∗}1/CVI is greater than zero, then the full amount of total $ can be used to purchase crypto assets (i.e., CAL = total $). Otherwise, the CAL = total $ - PEtot + total BTC ^{∗} CVI. Any crypto assets purchased may be deposited in the internal crypto account 72.

As noted above, operation 250 may also include defining settings for settlement and/or reward policies or preferences. The settlement policies may be part of a repayment paradigm or strategy that is defined before a transaction, at the time of the transaction, or even after the transaction. In some cases, a default repayment strategy may be defined for settlement of transactions automatically at or proximate to the time of the transaction. The user account 152 may have funding sources defined using external bank or internal bank assets, and the transaction management module 160 may be configured to immediately after the transaction, withdraw funds from the funding source or sources defined for settlement. Meanwhile, the funding sources may be specified to distinguish between using the first currency type or the second currency type in any desirable allocation. For example, the default settings may provide for immediate settlement of transactions using the first currency type. However, the customer may specify in the settings of the user account 152 a preference to utilize the second currency type (e.g., from the internal crypto account 72) to settle all or some portion of all or some transactions. Thus, for example, the customer may specify that 20% of the purchase cost on all transactions should be settled using crypto assets. In such an example, the crypto assets may be converted to fiat currency in sufficient amount (based on current market exchange rates at the time of the transaction or settlement) to cover 20% of the purchase cost of the transaction. In some cases, use of crypto assets may only be possible via the internal crypto account 72. Immediate settlement may generally be conducted without any interest being charged to the customer.

As another alternative, at the time of purchase, the customer may be provided with an option to secure a buy now, pay later loan to cover the cost of the transaction. The CIL platform 10 may ensure that the vendor receives funds to cover the cost of the transaction (if the transaction is approved based on the criteria described above) and the user account 152 may be used to transition the cost of the transaction into a buy now, pay later loan. Payments for the repayment of the loan may then be made, typically by default via the first currency type. However, as noted above, the customer may specify that all or some portion of the payments may be made including crypto assets. In this regard, for example, the customer may make monthly payments to repay a loan, and specify that 10% of each loan payment should be made from crypto assets. As noted above, sufficient crypto assets from the internal crypto account 72 may be converted into fiat currency to make each respective payment.

With respect to a reward strategy, the inter-currency credit management module 150 may also operate to apply any rewards earned by the customer to the user account 152 associated with the customer. Moreover, the rewards may be provided using either or both of the first and second currency types in any desired proportion. In this regard, for example, a 2% cashback award may be paid to the customer in Bitcoin, Ether, US Dollars, Euros, etc., and the proportion of the reward that is allocated to each currency type (e.g., between the first and second currency types) and between individual currencies within a given currency type (e.g., Bitcoin or Ether within the second currency type, and US Dollars or Euro within the first currency type) may be variable based on default settings or settings modified by the customer. Thus, for example, the customer may request that all rewards be paid in Bitcoin into the internal crypto account 72, or request that 50% of each reward be paid into the internal crypto account 72 in Ether, and 50% be paid in Euro into the internal bank. These allocations can be changed at any time, and the internal bank may further enable the customer to exchange currencies within the internal bank so that, for example, transactions can be supported in any type of fiat currency or crypto, and funds may also be retained in the accounts of the customer in any type of fiat currency or crypto. Exchanges may be conducted based on current market exchange rates at the time of each exchange. Moreover, direct deposits or other deposits made into accounts (especially at the internal bank) associated with the user account 152 may also be made in any currency type (and currency within each type), and conversions may be conducted by the customer into any other currency type (or currency within each type).

Thus, the currency integrator 50 may enable customers that have funds of different currencies (including different types) to support their access to fiat currency in whatever their present location may be based on the total of their combined assets (with CVI or other adjustments applicable as appropriate) instead of only based on their assets in the fiat currency of their present location. Settlement of transactions, reward, and even product returns can also be handled with integration of different currencies and currency types. Thus, example embodiments may maximize the flexibility that customers have relative to treating all currencies in their possession as liquid assets regardless of their physical location.

Example embodiments may also prove useful for product returns (which are normally provided in the same fiat currency used to purchase the product), since the customer may choose to convert the returned amount into any desired currency type (or currency within each type). Notably, however, due to the potential for volatility of various asset values (including crypto or other currencies), product returns and perhaps other transactions where a significant change has occurred may generally be handled in a context where the customer is provided with a quote or estimate on the rate of exchange for the currency requested in return prior to affecting any refunds. For example, if the user made a purchase when a currency had a high exchange rate, and then attempted a product return in the same currency when a lower exchange rate is the market rate, instead of automatically refunding the customer with the currency requested, the currency integrator 50 may provide options to the customer for taking the refund in different currencies (or currency types). In some cases, the customer can even request proportional amounts of the refund to be issued in different currencies (or currency types).

Although example embodiments may be used to conduct transactions with almost any vendor, some vendors may be part of a network of integrated merchants associated with the operator of the CIL platform 10. Such integrated merchants may offer merchant discount rates or other promotions in cooperation with the operator of the CIL platform 10. Integrated merchants may also cooperate with the operator of the CIL platform 10 to offer different settlement options to the customer at the point of sale. For example, the consumer may be enabled to convert purchases to interest bearing installment loans as an alternative to immediate settlement. Moreover, in some cases, purchases made may be converted to installment loans post purchase. In an example embodiment, installment loans may be synchronized so that only one payment date is utilized in any given period (e.g., month).

In connection with operation 250, various information about the user account 152 may also be provided to the customer. For example, the total assets (in all currency types and currencies within the types) for each bank account or for the internal crypto account 72 may be provided in a dashboard or other view. In some cases, the dashboard or other view may also show the available spend and/or list recent transactions made in connection with the user account 152. The customer may be enabled to select (e.g., by tapping or clicking icons associated therewith) individual transactions to change the repayment strategy in any of the ways described above. Thus, not only can the settlement details be changed in terms of timing and method be modified, but the settings for allocation of such payments from various accounts or currency types can also be managed on a transaction-by-transaction basis after the fact.

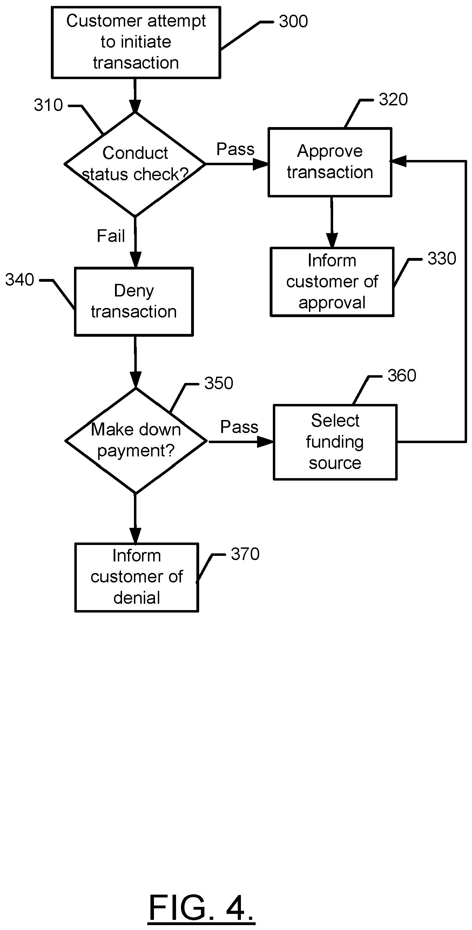

FIG. 4 is a block diagram of control flow associated with a customer executing a transaction at the point of sale (or online). As shown in FIG. 4, the initial operation of the customer attempting to initiate a transaction with a vendor may occur at operation 300. The customer may physically present the card (e.g., similar to presentation of a debit card), use a digital card, or may provide card number information if the card is not physically present. Alternatively, an online purchase or other purchase using a virtual card or otherwise associated with the user account 152 may be initiated by the customer. Thereafter, the currency integrator 50 may conduct a status check (e.g., check the account status in real time or based on the last snapshot view) to determine whether to approve or deny the transaction within a predetermined period of time (e.g., about 3 seconds) at operation 310. If the status check passes (e.g., indicating that the checking or savings account or internal crypto account 72 has a balance sufficient to cover the transaction based on the credit decisions described above), the currency integrator 50 may approve the transaction and the vendor may receive an indication that the transaction has been approved at operation 320. The vendor may put an authorized hold on funds associated with the amount of the transaction at the internal or external bank. The customer may also receive (e.g., via the client application 22) a push message to indicate that the transaction was approved at operation 330.

If instead, the status check does not pass (e.g., indicating that the checking or savings account does not have a balance sufficient to cover the transaction), then the currency integrator 50 may deny the transaction at operation 340. In an example embodiment, the customer may further receive an option to make a down payment at operation 350. For example, if the credit limit for the customer is $1000 and the purchase price of a transaction is $1200, the customer may be invited to make a down payment of $200 to get the financed amount of the transaction below the credit limit. If the customer elects to provide a down payment, the customer may be prompted to select funding sources, which may include allocations between the first currency type and the second currency type, at operation 360. Once the funds are transferred, the transaction may then be approved at operation 320. If the customer elects not to provide a down payment, then the customer may receive (e.g., via the client application 22) a push message to indicate that the transaction was denied at operation 370. In some cases, the vendor may also receive an indication that the transaction has been denied.

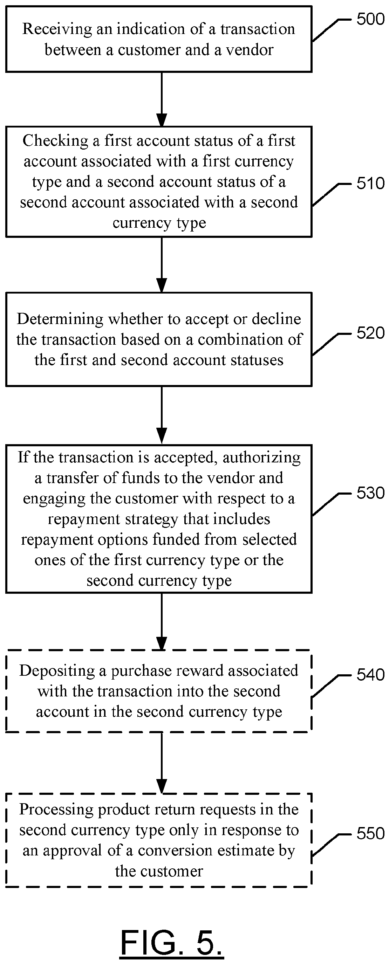

From a technical perspective, the CIL platform 10, and more particularly the currency integrator 50, described above may be used to support some or all of the operations described above. As such, the apparatus described in FIG. 2 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of processing a customer transaction according to one embodiment of the invention is shown in FIG. 5. The method may include receiving an indication of a transaction between a customer and a vendor at operation 500 and checking a first account status of a first account associated with a first currency type and a second account status of a second account associated with a second currency type at operation 510. The method may further include determining whether to accept or decline the transaction based on a combination of the first and second account statuses at operation 520, and, if the transaction is accepted, authorizing a transfer of funds to the vendor and engaging the customer with respect to a repayment strategy that includes repayment options funded from selected ones of the first currency type or the second currency type at operation 530. Although the example described above is based on checking two account statuses (e.g., accounts associated with the first and second currency types, respectively) to incorporate crypto into the decision making process, it is also possible to make the decisions solely based on crypto assets. In such an example, only the second currency type (e.g., the crypto currency) could be employed. Thus, for example, operation 510 may include only checking the second account status, and operation 520 may only include making the determination based on the second account status. Operation 530 could then also include funding options associated with only the second currency type. However, each operation could include the first currency type and accounts associated therewith as available options to augment the alternative method.

In an example embodiment, an apparatus for performing the method of FIG. 7 above may comprise a processor (e.g., the processor 102) or processing circuitry configured to perform some or each of the operations (500-530) described above. The processor may, for example, be configured to perform the operations (500-530) by performing hardware implemented logical functions, executing stored instructions, or executing algorithms for performing each of the operations. In some embodiments, the processor or processing circuitry may be further configured for additional operations or optional modifications to operations 500 to 530.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the first currency type may be a fiat currency and the second currency type may be crypto currency. In an example embodiment, the first account may be a savings account or checking account funded via the fiat currency and the second account may be a crypto currency account. In some cases, the repayment strategy may include settling the transaction, and the repayment strategy may define a first proportion of an amount of the transaction being paid in the fiat currency and a second proportion of the amount being paid in the crypto currency. In an example embodiment, the repayment strategy may include transitioning an amount of the transaction to an installment loan, and the repayment strategy may also define each payment of the installment loan to be paid such that a first proportion of the amount being paid in the fiat currency and a second proportion of the amount being paid in the crypto currency. The proportions may vary from 0 to 100% for each of the first and second proportions, but add up to 100%. In some cases, determining whether to accept or decline the transaction may include accepting the transaction if an amount of the transaction is less than a sum of a total of the first currency type in the first account and a volatility adjusted total of the second currency type in the second account minus total outstanding purpose exposure, and declining the transaction if the amount of the transaction is greater than the sum a total of the first currency type in the first account and a volatility adjusted total of the second currency type in the second account minus total outstanding purpose exposure. In an example embodiment, the volatility adjusted total of the second currency type may be a total of the second currency type multiplied by a crypto volatility index. In some cases, the method may further include an optional operation 540 (shown in dashed lines to show its optional nature), which may include depositing a purchase reward associated with the transaction into the second account in the second currency type. In an example embodiment, the method may further include an initial operation of establishing a user account linked to the first account and the second account. In this context, the first account may be one of a plurality of accounts associated with the first currency type, and each of the accounts associated with the first currency type may include funds in a different respective fiat currency. In some cases, the method may further include an optional operation 550 including processing product return requests in the second currency type only in response to an approval of a conversion estimate by the customer.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of processing a customer transaction, the method comprising:
receiving an indication of a transaction between a customer and a vendor;
checking a first account status of a first account associated with a first currency type and a second account status of a second account associated with a second currency type;
determining, within a predetermined time of the indication, whether to accept or decline the transaction based on a combination of the first and second account statuses; and
if the transaction is accepted, authorizing a transfer of funds to the vendor and engaging the customer with respect to a repayment strategy that includes repayment options funded from selected ones of the first currency type or the second currency type.

2. The method of claim 1, wherein the first currency type is a fiat currency and the second currency type is crypto currency.

3. The method of claim 2, wherein the first account is a savings account or checking account funded via the fiat currency and the second account is a crypto currency account.

4. The method of claim 3, wherein the repayment strategy comprises settling the transaction, and
wherein the repayment strategy defines a first proportion of an amount of the transaction being paid in the fiat currency and a second proportion of the amount being paid in the crypto currency.

5. The method of claim 3, wherein the repayment strategy comprises transitioning an amount of the transaction to an installment loan, and
wherein the repayment strategy defines each payment of the installment loan to be paid such that a first proportion of the amount being paid in the fiat currency and a second proportion of the amount being paid in the crypto currency.

6. The method of claim 1, wherein determining whether to accept or decline the transaction comprises:
accepting the transaction if an amount of the transaction is less than a sum of a total of the first currency type in the first account and a volatility adjusted total of the second currency type in the second account minus total outstanding purpose exposure; and
declining the transaction if the amount of the transaction is greater than the sum a total of the first currency type in the first account and a volatility adjusted total of the second currency type in the second account minus total outstanding purpose exposure.

7. The method of claim 6, wherein the volatility adjusted total of the second currency type is a total of the second currency type multiplied by a crypto volatility index.

8. The method of any preceding claim, further comprising depositing a purchase reward associated with the transaction into the second account in the second currency type.

9. The method of any preceding claim, further comprising an initial operation of establishing a user account linked to the first account and the second account,
wherein the first account is one of a plurality of accounts associated with the first currency type, and
wherein each of the accounts associated with the first currency type includes funds in a different respective fiat currency.

10. The method of any preceding claim, further comprising processing a product return request in the second currency type only in response to an approval of a conversion estimate by the customer.

11. An apparatus for processing a customer transaction, the apparatus comprising processing circuitry configured to perform the method of any of claims 1-10.
